# EUROPÄISCHE PATENTSCHRIFT

(11) **EP 3 540 273 B1**
(45) Veröffentlichungstag und Bekanntmachung des Hinweises auf die Patenterteilung: **24.06.2020**
(21) Anmeldenummer: 19159896.0
(22) Anmeldetag: 28.02.2019
(51) Int. Cl.: F16J 15/3232, F16J 15/3252

(54) **DICHTRING**
GASKET
BAGUE D'ÉTANCHÉITÉ

(30) Priorität: 14.03.2018 DE 102018105913
(43) Veröffentlichungstag der Anmeldung: 18.09.2019
(73) Patentinhaber: Carl Freudenberg KG, 69469 Weinheim (DE)
(72) Erfinder: Watling, Simon, Blyth, Northumberland, NE24 2PR (GB)

(56) Entgegenhaltungen:
- EP-A2- 1 288 538
- FR-A1- 2 404 782
- US-A1- 2006 006 608

## Beschreibung

### Technisches Gebiet

Die Erfindung betrifft einen Dichtring, umfassend einen Lippenring mit zumindest einer Dichtlippe und einen Stützring, wobei der Lippenring und der Stützring miteinander verbunden sind, wobei der Lippenring und der Stützring jeweils aus einem gummielastischen Werkstoff bestehen und wobei der Lippenring einen kleineren E-Modul als der Stützring aufweist.

### Stand der Technik

Ein solcher Dichtring ist aus der DE 27 43 501 A1 bekannt. Der Lippenring besteht aus einem an sich bekannten elastomeren Werkstoff. Der Stützring kann ebenfalls aus einem elastomeren, thermoplastischen oder duoplastischen Werkstoff bestehen. Der Lippenring und der Stützring sind bevorzugt durch eine form- und kraftschlüssige Verankerung miteinander verbunden.

Ein weiterer Dichtring ist aus der EP 1 288 538 A2 bekannt.
Der Lippenring besteht aus einem elastomeren Werkstoff und ist zerstörungsfrei lösbar mit dem Stützkörper verbunden, wobei der Lippenring einen Klemmwulst aufweist, in dem eine ringförmig ausgebildete Schraubenfeder angeordnet ist. Der Klemmwulst ist unter radialer Vorspannung an einer Gegenfläche des Stützkörpers festlegbar.

Der Stützkörper kann als Gehäuse von Stoßdämpfern oder Hydraulik- / Pneumatik-Aggregaten ausgebildet sein und besteht aus einem zähharten Werkstoff.

Ein weiterer Dichtring, umfassend die Merkmale aus dem Oberbegriff von Patentanspruch 1, ist aus der US 2006/0006608 A1 bekannt. Der Lippenring und der Stützring sind mechanisch miteinander verbunden, wobei der Stützring auch die Aufgabe hat, Spaltextrusion des Lippenrings während der bestimmungsgemäßen Verwendung des Dichtrings zu verhindern.
Der Stützring besteht aus einem Material, das formstabiler als das des Lippenrings ist. Anders ausgedrückt hat der Lippenring einen kleineren E-Modul als der Stützring.
Der Lippenring besteht bevorzugt aus einem elastomeren Werkstoff. Der Stützring kann aus Polyurethan oder einem vergleichbaren Werkstoff mit einem E-Modul bestehen, größer als der E-Modul des Lippenrings.

Ein weiterer Dichtring ist aus der DE 38 13 037 C1 bekannt. Der Dichtring kann eine Kolbenstange eines Teleskopstoßdämpfers abdichten. Der Dichtring umfasst einen radial innenliegenden Lippenring aus PTFE und einen radial außenliegenden Stützring, der aus Gummi besteht. Der Lippen- und der Stützring sind einstückig miteinander verbunden.
Der Stützring des vorbekannten Dichtrings kann aus Gummi bestehen, weil der Lippenring aus PTFE eine gute Formbeständigkeit aufweist und dadurch den gesamten Dichtring in Form hält. Durch die unterschiedlichen Materialien, insbesondere dadurch, dass das relativ wertvolle PTFE-Material sehr sparsam nur zur Herstellung des Lippenrings verwendet wird, ist der gesamte Dichtring kostengünstig herstellbar.

Beide zuvor beschriebenen Dichtringe sind herstellungsbedingt und während ihrer bestimmungsgemäßen Verwendung jeweils im Wesentlichen kreisrund ausgebildet und weisen eine gute Formbeständigkeit auf. Diese gute Formbeständigkeit wird dadurch erreicht, dass einer der Ringe der vorbekannten Dichtringe, hier entweder der Stützkörper oder der Lippenring, aus einem zähharten, formstabilen Werkstoff besteht.

### Darstellung der Erfindung

Der Erfindung liegt die Aufgabe zu Grunde, einen Dichtring der eingangs genannten Art derart weiterzuentwickeln, dass der Lippenring und der Stützring gut statisch gegeneinander abgedichtet sind, dass der Dichtring insgesamt weniger formbeständig und ausreichend elastisch ist, so dass er auch dann zur Anwendung gelangen kann, wenn das abzudichtende Maschinenelement eine von einer kreisrunden Form abweichende Form und/oder der Einbauraum, in dem der Dichtring eingebaut ist, eine von einer kreisrunden Form abweichende Form aufweist.
Insbesondere sollen auch in Wesentlichen elliptische Oberflächen zuverlässig abgedichtet werden können.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass der Lippenring radial innenumfangsseitig und stirnseitig beiderseits jeweils zumindest eine Dichtlippe aufweist und dass der Lippenring radial außenumfangsseitig, axial zwischen den Dichtlippen, zumindest einen Dichtwulst aufweist.
Zur statischen Abdichtung des Lippenrings im Stützring ist es vorgesehen, dass der Lippenring radial außenumfangsseitig, axial zwischen den Dichtlippen, zumindest einen Dichtwulst aufweist. Der Dichtwulst kann den zuvor genannten, gemeinsamen Wurzelbereich bilden.
Der Dichtring kann zu einer gedachten Radialebene, die sich axial mittig durch den Dichtwulst erstreckt, im Wesentlichen symmetrisch ausgebildet sein, wobei von den zuvor beschriebenen Dichtlippen eine axial einerseits der gedachten Radialebene und die andere axial andererseits der gedachten Radialebene angeordnet ist.

Im Dichtwulst kann eine Schraubendruckfeder mit radial nach außen wirksamer Federkraft angeordnet sein. Durch eine solche Schraubendruckfeder wird der Lippenring unter radialer Vorspannung im Stützring gehalten. Eine unerwünschte Relaxation des Dichtwulstes ist dadurch ausgeschlossen, und Lippenring und Stützring sind zuverlässig aneinander festgelegt.

Die Schraubendruckfeder ist bevorzugt in sich geschlossen und ringförmig ausgebildet, so dass die radiale Vorspannung des Dichtwulstes entlang seines gesamten Umfangs von übereinstimmender Größe ist.

Bevorzugt ist die Schraubendruckfeder vollständig vom Werkstoff des Lippenrings umschlossen. Durch die vollständige Ummantelung der Schraubendruckfeder vom Werkstoff des Lippenrings ist die Schraubendruckfeder zuverlässig vor Korrosion geschützt. Einer zeit- und kostenaufwändigen Behandlung der Schraubendruckfeder beispielsweise mit einer Korrosionsschutzschicht bedarf es deshalb nicht.
Der innere Hohlraum der Schraubendruckfeder, den die Windungen der Schraubendruckfeder außenseitig begrenzen, kann vom Werkstoff des Lippenrings vollständig ausgefüllt sein. Die Herstellung des Lippenrings ist durch eine solche Ausgestaltung wesentlich vereinfacht, weil es keiner Abdichtung des inneren Hohlraums bei der Vulkanisation des Lippenrings bedarf. Durch die einfache Herstellung ist der gesamte Dichtring einfach und kostengünstig herstellbar.

Der Dichtwulst weist außenumfangsseitig eine Kontaktfläche auf, die eine Gegenfläche des Stützrings unter radialer elastischer Vorspannung dichtend berührt.

Insbesondere dann, wenn der Lippenring zerstörungsfrei lösbar mit dem Stützring verbunden ist, muss auf eine zuverlässige Abdichtung zwischen Kontaktfläche und Gegenfläche besonders geachtet werden.
Dafür ist es von Vorteil, dass die Kontaktfläche und die Gegenfläche im Wesentlichen kongruent gestaltet sind.
Sind der Lippenring und der Stützring demgegenüber stoffschlüssig miteinander verbunden, ist eine kongruente Gestalt von Kontaktfläche und Gegenfläche ebenfalls vorteilhaft. Dadurch entsteht eine insgesamt große Verbindungsfläche, die für eine zuverlässige Verbindung von Lippenring und Stützring von Vorteil ist.

Zur Verbesserung der Dichtwirkung kann es vorgesehen sein, dass der Lippenring radial innenumfangsseitig axial zwischen den Dichtlippen und radial innenseitig des Dichtwulstes, eine Vorschaltdichtung aufweist. Durch die Vorschaltdichtung ist die axial in Richtung eines abzudichtenden Raums angeordnete Dichtlippe noch besser vor einer Beaufschlagung mit Verunreinigungen aus der Umgebung geschützt.

Der axiale Zwischenraum zwischen den stirnseitig beiderseits angeordneten Dichtlippen kann bedarfsweise mit einem Sperrfett befüllt sein, um die Dichtwirkung des Dichtring zu verbessern. Außerdem bewirkt das Sperrfett eine Schmierung der Dichtlippen, die vom abzudichtenden Medium nicht unmittelbar beaufschlagt sind. Durch die Schmierwirkung wird abrasiver Verschleiß der Dichtlippen und/oder der Vorschaltdichtung deutlich reduziert und der Dichtring weist gleichbleibend gute Gebrauchseigenschaften während einer langen Gebrauchsdauer auf.

Außerdem ist von Vorteil, dass weder der Lippenring noch der Stützring aus einem zähharten, im Wesentlichen starren und damit besonders formbeständigen Werkstoff bestehen. Vielmehr bestehen der Lippenring und der Stützring beide aus einem gummielastischen Werkstoff, so dass sich der gesamte Dichtring besonders gut an die jeweiligen Gegebenheiten des Anwendungsfalles anpassen lässt, auch dann, wenn die abzudichtende Oberfläche eines abzudichtenden Maschinenelements nicht im Wesentlichen kreisrund ist und/oder der Einbauraum eine von einer kreisrunden Form abweichende Form aufweist.

Trotz dieser gummielastischen Eigenschaften von Lippenring und Stützring ist von Vorteil, dass der Stützring einen im Vergleich zum Lippenring größeren E-Modul aufweist und dadurch im Vergleich zum Lippenring etwas formbeständiger ist und den relativ weniger formbeständig Lippenring dadurch stützt.
Insgesamt ist der Dichtring dadurch so nachgiebig wie möglich und nur so formstabil wie nötig.
Die Herstellung eines solchen Dichtrings ist einfach und kostengünstig möglich. Herstellungsbedingt ist der Dichtring kreisrund. Der herstellungsbedingt im Wesentlichen kreisrunde Lippenring ist vom herstellungsbedingt im Wesentlichen kreisrunden Stützring außenumfangsseitig umschlossen. Soll mit einem solchen Dichtring zum Beispiel eine nicht-kreisrunde Oberfläche, insbesondere eine elliptische Oberfläche, in einem entsprechend gestalteten Gehäuse abgedichtet werden, kann der gummielastische Dichtring während seiner Montage problemlos an die nicht-kreisrunde Form angepasst werden. Durch die gummielastischen Eigenschaften des Dichtrings liegt die Dichtlippe mit gleicher elastischer Vorspannung entlang des gesamten Umfangs des abzudichtenden Maschinenelements an, so dass eine unerwünscht hohe mechanische Beanspruchung der Dichtlippe vermieden wird und der Dichtring gleichbleibend gute Gebrauchseigenschaften während einer langen Gebrauchsdauer aufweist.

Nach einer vorteilhaften Ausgestaltung kann es vorgesehen sein, dass der Lippenring und der Stützring jeweils einen E-Modul aufweisen, der 0,01 bis 0,1 N/mm² beträgt. Eine derartige Elastizität ist für gummielastische Werkstoffe üblich. Dadurch kann der herstellungsbedingt im Wesentlichen kreisrunde Dichtring an die Gestalt abzudichtender Oberflächen auch dann gut angepasst werden, wenn diese nicht im Wesentlichen kreisrund sind.
Ein Lippenring, der einen E-Modul < 0,01 N/mm² hätte, wäre nachteilig, weil dadurch der Dichtring insgesamt eine nicht ausreichende Formbeständigkeit aufweisen würde.
Wäre der E-Modul des Stützrings > 0,1 N/mm², wäre die Formbeständigkeit des gesamten Dichtrings demgegenüber zu groß, und er würde sich nicht mehr in ausreichendem Maße an den jeweiligen Anwendungsfall anpassen lassen, wie zuvor beschrieben.

Bevorzugt beträgt das Verhältnis aus E-Modul des Stützrings zu E-Modul des Lippenrings zumindest 1,25, weiter bevorzugt 1,25 bis 2. Ein solches Verhältnis ist vergleichsweise klein, so dass der Lippenring und der Stützring eine zwar von einander abweichende, dennoch eine nicht zu stark unterschiedliche Elastizität aufweisen. Der Stützring weist eine im Vergleich zum Lippenring kleinere Elastizität auf, um seine Stützfunktion für den Lippenring erfüllen zu können. Wäre das zuvor beschriebene Verhältnis kleiner, wäre die Stützwirkung des Stützrings für den Lippenring für die meisten Anwendungsfälle nicht ausreichend. Wäre das Verhältnis demgegenüber größer, würde sich der gesamte Dichtring nicht mehr problemlos an abzudichtende Oberflächen anpassen lassen, die eine von der kreisrunden Form abweichende Form aufweisen.

Der Lippenring und der Stützring können zerstörungsfrei lösbar miteinander verbunden sein. Durch die ungebundene und zerstörungsfrei lösbare Verbindung von Lippenring und Stützring können diese beiden Teile bedarfsweise jeweils separat voneinander ausgetauscht werden. Für Anwendungsfälle, in denen der Lippenring einen hohen abrasiven Verschleiß aufweist, beispielsweise dadurch, dass eine abzudichtende, in axialer Richtung hin und her bewegliche Stange in einer stark verunreinigten Umgebung eingesetzt wird oder das abzudichtende Medium viele, abrasiv wirksame Partikel enthält, ist von Vorteil, dass ein im Laufe der Gebrauchsdauer des Dichtrings verschlissener Lippenring einfach vom Stützkörper entfernt und durch einen neuen Lippenring ersetzt werden kann. Die mechanische Verbindung zwischen Lippenring und Stützring beruht in einem solchen Fall hauptsächlich auf einer radialen Vorspannung, mit der der Lippenring im Stützring angeordnet ist.

Der Lippenring und der Stützring können kraft- und/oder formschlüssig miteinander verbunden sein.

Nach einer anderen Ausgestaltung kann es vorgesehen sein, dass der Lippenring und der Stützring stoffschlüssig miteinander verbunden sind. Der Lippenring und der Stützring bilden dadurch eine nicht-trennbare Einheit. Bei einer solchen Ausgestaltung ist von Vorteil, dass unerwünschte Relativbewegungen zwischen dem Lippenring und dem Stützring während der Montage des Dichtrings und auch während dessen bestimmungsgemäßer Verwendung zuverlässig ausgeschlossen sind. Die Gefahr von Montagefehlern ist minimiert.

Der Lippenring kann radial innenumfangsseitig und stirnseitig beiderseits jeweils zumindest eine Dichtlippe aufweisen. Die Dichtlippen können axial in entgegengesetzter Richtung vorgewölbt sein, um axial zueinander benachbarte Räume gegeneinander abzudichten. Eine der Dichtlippen ist zum Beispiel in Richtung eines abzudichtenden Raums einer Dichtungsanordnung vorgewölbt und dichtet abzudichtendes Medium in einem abzudichtenden Raum ab. Die andere, axial vom abzudichtenden Raum abgewandte Dichtlippe verhindert, dass zum Beispiel Verunreinigungen aus der Umgebung in Richtung des abzudichtenden Raums vordringen. Die beiden Dichtlippen können einen gemeinsamen Wurzelbereich aufweisen, aus dem sie sich in axial entgegengesetzte Richtungen erstrecken.

Bevorzugt ist zumindest eine der Dichtlippen, weiter bevorzugt sind alle Dichtlippen radial außenumfangsseitig von einer Ringwendelfeder umschlossen, mit radial nach innen wirksamer Federkraft. Dadurch dichten die Dichtlippen auch dann zuverlässig ab, wenn kein oder nur ein besonders geringer Differenzdruck zwischen den beiden abzudichtenden Räumen besteht. Durch die Verwendung der Ringwendelfedern spielt eine mögliche Relaxation des gummielastischen Werkstoffs des Lippenrings praktisch keine Rolle, weil die Ringwendelfedern für eine radiale Anpressung der Dichtlippen an die abzudichtende Oberfläche des abzudichtenden Maschinenelements sorgen.

### Kurzbeschreibung der Zeichnung

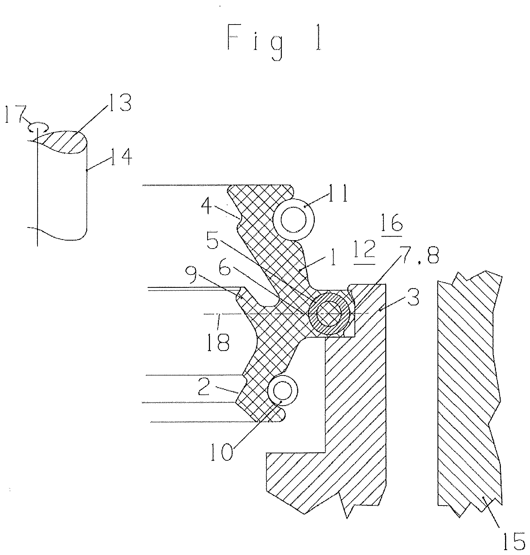

Ein Ausführungsbeispiel des erfindungsgemäßen Dichtrings wird nachfolgend anhand von Figur 1 näher erläutert.
Der erfindungsgemäße Dichtring ist darin als Bestandteil einer Dichtungsanordnung in schematischer Darstellung gezeigt.

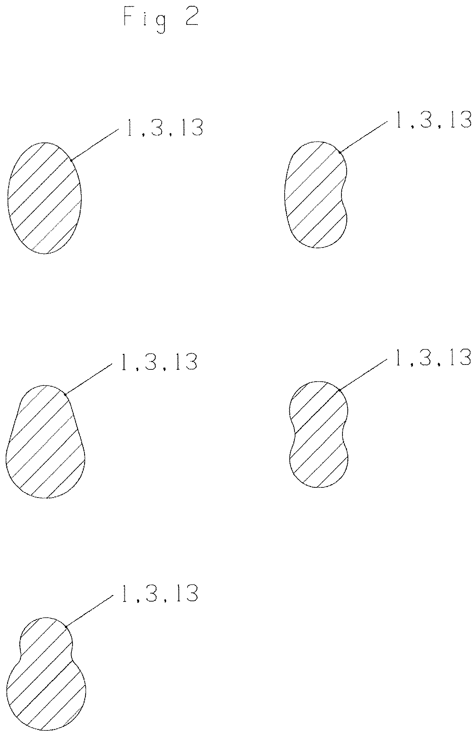

In Figur 2 sind unterschiedliche Querschnitte des abzudichtenden Maschinenelements in schematischer Darstellung gezeigt. Aussenumfangsseitig sind die Querschnitte jeweils vom erfindungsgemäßen Dichtring umschlossen.

### Ausführung der Erfindung

In Figur 1 ist der erfindungsgemäße Dichtring gezeigt, der in einem Einbauraum 12 einer Dichtungsanordnung angeordnet ist. Der Einbauraum 12 wird radial innenseitig durch ein abzudichtendes Maschinenelement 13 mit einer abzudichtenden Oberfläche 14 begrenzt und radial außenseitig von einem Gehäuse 15, das das abzudichtende Maschinenelement 13 mit radialem Abstand außenumfangsseitig umschließt. Der durch den radialen Abstand gebildete Spalt 16 bildet den Einbauraum 12.

Im hier gezeigten Ausführungsbeispiel weist das abzudichtende Maschinenelement 13 eine abzudichtende Oberfläche 14 auf, die eine von einer kreisrunden Form abweichende Form aufweist. Das abzudichtende Maschinenelement 13 ist, im Querschnitt betrachtet, elliptisch Das abzudichtende Maschinenelement 13 kann zum Beispiel das Tauchrohr eines Teleskopdämpfers sein, das einen elliptischen Querschnitt aufweist. Entsprechend ausgebildet ist die den Einbauraum 12 begrenzende Wandung des Gehäuses 15, so dass die den Einbauraum 12 begrenzende Wandung des Gehäuses 15 eine an die abzudichtende Oberfläche 14 angepasste Gestalt aufweist und ebenfalls elliptisch ausgebildet ist.
Die radiale Weite des Spalts 16 ist, in Umfangsrichtung 17 des abzudichtenden Maschinenelements 13 betrachtet, konstant.

Der Lippenring 1 und der Stützring 3 bestehen jeweils aus einem gummielastischen Werkstoff, wobei der Stützring 3 eine geringere Elastizität als der Lippenring 1 aufweist, um den Lippenring 1 stützen zu können.
Im hier gezeigten Ausführungsbeispiel beträgt das Verhältnis aus E-Modul des Stützrings 3 zur E-Modul des Lippenrings 1 1,25 bis 2.

Der Lippenring 1 weist radial innenumfangsseitig und stirnseitig beiderseits die Dichtlippen 2, 4 auf, wobei, in axialer Richtung betrachtet, zwischen den Dichtlippen 2, 4 die Vorschaltdichtung 9 angeordnet ist. Beide Dichtlippen 2, 4 und die Vorschaltdichtung 9 umschließen die abzudichtende Oberfläche 14 des abzudichtenden Maschinenelements 13 unter radialer Vorspannung dichtend.

Die Dichtlippen 2, 4 sind radial außenumfangsseitig jeweils von der entsprechenden Ringwendelfeder 10, 11 umschlossen, mit radial nach innen wirksamer Federkraft.

Der Dichtring ist im Wesentlichen symmetrisch zur gedachten Radialebene 18 ausgebildet, die sich in radialer Richtung und axial mittig durch den Dichtwulst 5 erstreckt.

Im Dichtwulst 5 ist die Schraubendruckfeder 6 angeordnet, die durch ihre radial nach außen wirksame Federkraft für eine radiale Vorspannung sorgt, mit der der Lippenring 1 im Stützring 3 angeordnet ist.
Die Schraubendruckfeder 6 ist vom gummielastischen Werkstoff des Lippenrings 1 außenumfangsseitig vollständig umschlossen und innenumfangsseitig vollständig ausgefüllt.

Der Stützring 3 bildet eine statische Abdichtung zum Gehäuse 15.

In Figur 2 sind unterschiedliche Querschnitte des abzudichtenden Maschinenelements 13 in schematischer Darstellung gezeigt. Aussenumfangsseitig sind die Querschnitte jeweils vom erfindungsgemäßen Dichtring dichtend umschlossen. Der Querschnitt kann, wie zuvor beschrieben, im Wesentlichen elliptisch sein.
Auch ovale, tropfenförmige, nierenförmige oder im Wesentlichen 8-förmige Querschnitte können durch den erfindungsgemäßen Dichtring abgedichtet werden.

## Patentansprüche

1. Dichtring, umfassend einen Lippenring (1) mit zumindest einer Dichtlippe (2) und einen Stützring (3), wobei der Lippenring (1) und der Stützring (3) miteinander verbunden sind, wobei der Lippenring (1) und der Stützring (3) jeweils aus einem gummielastischen Werkstoff bestehen und wobei der Lippenring (1) einen kleineren E-Modul als der Stützring (3) aufweist, **dadurch gekennzeichnet, dass** der Lippenring (1) radial innenumfangsseitig und stirnseitig beiderseits jeweils zumindest eine Dichtlippe (2, 4) aufweist und dass der Lippenring (1) radial außenumfangsseitig, axial zwischen den Dichtlippen (2, 4), zumindest einen Dichtwulst (5) aufweist.

2. Dichtring nach Anspruch 1, **dadurch gekennzeichnet, dass** im Dichtwulst (5) eine Schraubendruckfeder (6) mit radial nach außen wirksamer Federkraft angeordnet ist.

3. Dichtring nach einem der Ansprüche 1 oder 2, **dadurch gekennzeichnet, dass** der Dichtwulst (5) außenumfangsseitig eine Kontaktfläche (7) aufweist, die eine Gegenfläche (8) des Stützrings (3) unter radialer elastischer Vorspannung anliegend berührt.

4. Dichtring nach Anspruch 3, **dadurch gekennzeichnet, dass** die Kontaktfläche (7) und die Gegenfläche (8) kongruent gestaltet sind.

5. Dichtring nach einem der Ansprüche 1 bis 4, **dadurch gekennzeichnet, dass** der Lippenring (1) radial innenumfangsseitig, axial zwischen den Dichtlippen (2, 4) und radial innenseitig des Dichtwulstes (5), eine Vorschaltdichtung (9) aufweist.

6. Dichtring nach einem der Ansprüche 1 bis 5, **dadurch gekennzeichnet, dass** der Lippenring (1) und der Stützring (3) jeweils einen E-Modul aufweisen, der 0,01 bis 0,1 N/mm² beträgt.

7. Dichtring nach einem der Ansprüche 1 bis 6, **dadurch gekennzeichnet, dass** das Verhältnis aus E-Modul des Stützrings (3) zu E-Modul des Lippenrings (1) zumindest 1,25 beträgt.

8. Dichtring nach Anspruch 7, **dadurch gekennzeichnet, dass** das Verhältnis 1,25 bis 2 beträgt.

9. Dichtring nach einem der Ansprüche 1 bis 8, **dadurch gekennzeichnet, dass** der Lippenring (1) und der Stützring (3) zerstörungsfrei lösbar miteinander verbunden sind.

10. Dichtring nach Anspruch 9, **dadurch gekennzeichnet, dass** der Lippenring (1) und der Stützring (3) kraft- und/oder formschlüssig miteinander verbunden sind.

11. Dichtring nach einem der Ansprüche 1 bis 8, **dadurch gekennzeichnet, dass** der Lippenring (1) und der Stützring (3) stoffschlüssig miteinander verbunden sind.

12. Dichtring nach einem der Ansprüche 1 bis 11, **dadurch gekennzeichnet, dass** zumindest eine der Dichtlippen (2, 4) radial außenumfangsseitig von einer Ringwendelfeder (10, 11) mit radial nach innen wirksamer Federkraft umschlossen ist.

13. Dichtring nach Anspruch 12, **dadurch gekennzeichnet, dass** alle Dichtlippen (2, 4) radial außenumfangsseitig jeweils von einer Ringwendelfeder (10, 11) mit radial nach innen wirksamer Federkraft umschlossen sind.

## Claims

1. Sealing ring comprising a lip ring (1) which has at least one sealing lip (2), and comprising a support ring (3), wherein the lip ring (1) and the support ring (3) are connected to one another, wherein the lip ring (1) and the support ring (3) each consist of a rubber-elastic material, and wherein the lip ring (1) has a lower modulus of elasticity than the support ring (3), **characterized in that**, radially on the inner circumferential side and on the end side on both sides, the lip ring (1) has in each case at least one sealing lip (2, 4), and **in that**, radially on the outer circumferential side, axially between the sealing lips (2, 4), the lip ring (1) has at least one sealing bead (5).

2. Sealing ring according to Claim 1, **characterized in that** a helical compression spring (6) with a radially outwardly acting spring force is arranged in the sealing bead (5).

3. Sealing ring according to one of Claims 1 or 2, **characterized in that**, on the outer circumferential side, the sealing bead (5) has a contact surface (7) which is in contact in an abutting manner, with radial elastic preloading, with a mating surface (8) of the support ring (3) .

4. Sealing ring according to Claim 3, **characterized in that** the contact surface (7) and the mating surface (8) are formed to be congruent.

5. Sealing ring according to one of Claims 1 to 4, **characterized in that**, radially on the inner circumferential side, axially between the sealing lips (2, 4) and radially inside the sealing bead (5), the lip ring (1) has a buffer seal (9).

6. Sealing ring according to one of Claims 1 to 5, **characterized in that** the lip ring (1) and the support ring (3) each have a modulus of elasticity of 0.01 to 0.1 N/mm².

7. Sealing ring according to one of Claims 1 to 6, **characterized in that** the ratio of the modulus of elasticity of the support ring (3) to the modulus of elasticity of the lip ring (1) amounts to at least 1.25.

8. Sealing ring according to Claim 7, **characterized in that** the ratio amounts to 1.25 to 2.

9. Sealing ring according to one of Claims 1 to 8, **characterized in that** the lip ring (1) and the support ring (3) are connected to one another in a non-destructively detachable manner.

10. Sealing ring according to Claim 9, **characterized in that** the lip ring (1) and the support ring (3) are connected to one another in a force- and/or form-fitting manner.

11. Sealing ring according to one of Claims 1 to 8, **characterized in that** the lip ring (1) and the support ring (3) are connected to one another in a materially bonded manner.

12. Sealing ring according to one of Claims 1 to 11, **characterized in that**, radially on the outer circumferential side, at least one of the sealing lips (2, 4) is surrounded by a ring coil spring (10, 11) with a radially inwardly acting spring force.

13. Sealing ring according to Claim 12, **characterized in that**, radially on the outer circumferential side, all the sealing lips (2, 4) are in each case surrounded by a ring coil spring (10, 11) with a radially inwardly acting spring force.

## Revendications

1. Bague d'étanchéité, comprenant une bague à lèvre (1) avec au moins une lèvre d'étanchéité (2) et une bague d'appui (3), la bague à lèvre (1) et la bague d'appui (3) étant reliées l'une à l'autre, la bague à lèvre (1) et la bague d'appui (3) étant composées respectivement d'un matériau élastique comme du caoutchouc, et la bague à lèvre (1) présentant un module d'élasticité inférieur à celui de la bague d'appui (3), **caractérisée en ce que** la bague à lèvre (1) présente au moins une lèvre d'étanchéité (2, 4) radialement côté circonférence intérieure et sur la face, des deux côtés respectivement, et **en ce que** la bague à lèvre (1) présente au moins un bourrelet d'étanchéité (5) axialement entre les lèvres d'étanchéité (2, 4), radialement côté circonférence extérieure.

2. Bague d'étanchéité selon la revendication 1, **caractérisée en ce qu'**un ressort de pression cylindrique (6) est disposé dans le bourrelet d'étanchéité (5), avec une force de ressort agissant radialement vers l'extérieur.

3. Bague d'étanchéité selon l'une quelconque des revendications 1 ou 2, **caractérisée en ce que** le bourrelet d'étanchéité (5) présente une surface de contact (7) du côté circonférence extérieure qui entre en contact adjacent avec une surface antagoniste (8) de la bague d'appui (3) sous précontrainte élastique radiale.

4. Bague d'étanchéité selon la revendication 3, **caractérisée en ce que** la surface de contact (7) et la surface antagoniste (8) sont configurées de manière congruente.

5. Bague d'étanchéité selon l'une quelconque des revendications 1 à 4, **caractérisée en ce que** la bague à lèvre (1) présente un joint placé en amont (9), radialement du côté circonférence intérieure, axialement entre les lèvres d'étanchéité (2, 4) et radialement côté intérieur du bourrelet d'étanchéité (5) .

6. Bague d'étanchéité selon l'une quelconque des revendications 1 à 5, **caractérisée en ce que** la bague à lèvre (1) et la bague d'appui (3) présentent respectivement un module d'élasticité de 0,01 à 0,1 N/mm².

7. Bague d'étanchéité selon l'une quelconque des revendications 1 à 6, **caractérisée en ce que** le rapport entre le module d'élasticité de la bague d'appui (3) et le module d'élasticité de la bague à lèvre (1) est d'au moins 1,25.

8. Bague d'étanchéité selon la revendication 7, **caractérisée en ce que** le rapport est compris entre 1,25 et 2.

9. Bague d'étanchéité selon l'une quelconque des revendications 1 à 8, **caractérisée en ce que** la bague à lèvre (1) et la bague d'appui (3) sont reliées l'une à l'autre de manière détachable sans destruction.

10. Bague d'étanchéité selon la revendication 9, **caractérisée en ce que** la bague à lèvre (1) et la bague d'appui (3) sont reliées l'une à l'autre par adhérence et/ou par complémentarité de forme.

11. Bague d'étanchéité selon l'une quelconque des revendications 1 à 8, **caractérisée en ce que** la bague à lèvre (1) et la bague d'appui (3) sont reliées l'une à l'autre par liaison de matière.

12. Bague d'étanchéité selon l'une quelconque des revendications 1 à 11, **caractérisée en ce qu'**au moins l'une des lèvres d'étanchéité (2, 4) est entourée radialement côté circonférence extérieure d'un ressort hélicoïdal annulaire (10, 11) avec une force de ressort agissant radialement vers l'intérieur.

13. Bague d'étanchéité selon la revendication 12, **caractérisée en ce que** toutes les lèvres d'étanchéité (2, 4) sont entourées radialement côté circonférence extérieure d'un ressort hélicoïdal annulaire (10, 11) respectivement, avec une force de ressort agissant radialement vers l'intérieur.
